# EUROPEAN PATENT SPECIFICATION

(11) **EP 3 730 581 B1**
(45) Date of publication and mention of the grant of the patent: **17.09.2025**
(21) Application number: 18892001.1
(22) Date of filing: 18.12.2018
(51) Int. Cl.: C09K 5/04, F25B 1/00

(54) **REFRIGERANT-CONTAINING COMPOSITION, USE THEREOF AND REFRIGERATOR COMPRISING SAME, AND METHOD FOR OPERATING SAID REFRIGERATOR**
KÄLTEMITTEL ENTHALTENDE ZUSAMMENSETZUNG, IHRE VERWENDUNG UND DIESE ENTHALTENDE KÄLTEMASCHINE SOWIE VERFAHREN ZUM BETRIEB DIESER KÄLTEMASCHINE
COMPOSITION CONTENANT UN RÉFRIGÉRANT, APPLICATION ASSOCIÉE, MACHINE FRIGORIFIQUE POSSÉDANT LADITE COMPOSITION, ET PROCÉDÉ DE FONCTIONNEMENT DE LADITE MACHINE FRIGORIFIQUE

(30) Priority: 18.12.2017 JP 2017242186; 17.10.2018 WO PCT/JP2018/038747
(43) Date of publication of application: 28.10.2020
(73) Proprietor: DAIKIN INDUSTRIES, LTD., Osaka-Shi, Osaka 530-0001 (JP)
(72) Inventor: ITANO, Mitsushi, Osaka-shi, Osaka 530-0001 (JP); KARUBE, Daisuke, Osaka-shi, Osaka 530-0001 (JP); YOTSUMOTO, Yuuki, Osaka-shi, Osaka 530-0001 (JP); TAKAHASHI, Kazuhiro, Osaka-shi, Osaka 530-0001 (JP)
(74) Representative: Hoffmann Eitle
(86) International application number: PCT/JP2018/046644
(87) International publication number: WO 2019/124404

(56) References cited:
- EP-A1- 3 795 925
- EP-A1- 3 862 408
- WO-A1-2015/115252
- WO-A1-2015/141678
- WO-A1-2015/186557
- WO-A1-2015/186670
- JP-A- 2016 011 423
- JP-A- 2016 172 869
- US-A1- 2016 340 565
- US-A1- 2017 002 245

## Description

### Technical Field

The present disclosure relates to a composition comprising a refrigerant, use of the composition, a refrigerating machine having the composition, and a method for operating the refrigerating machine.

### Background Art

R410A is currently used as an air conditioning refrigerant for e.g. home air conditioners. R410A is a two-component mixed refrigerant of difluoromethane (CH₂F₂; HFC-32 or R32) and pentafluoroethane (C₂HF₅; HFC-125 or R125), and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (WO2015/141678).

US-A-2017/002245 discloses a working fluid for heat cycle, which contains trifluoroethylene (HFO-1123) and 1,2-difluoroethylene (HFO-1132), and may optionally contain difluoromethane (R32).

US-A-2016/340565 describes a working fluid for heat cycle, which contains trifluoroethylene and difluoroethylene, wherein the content of difluoroethylene is less than 1.5 mass % based on the working fluid.

### Summary of Invention

### Technical Problem

The present inventors performed independent examination, and conceived of the idea that no prior art had developed refrigerant compositions having two types of performance, i.e., a coefficient of performance (COP) that is equivalent to that of R410A and a sufficiently low GWP. An object of the present disclosure is to solve this unique problem.

### Solution to Problem

The present invention provides a composition (also referred to as *"the present composition"* hereinafter) comprising a refrigerant comprising HFO-1132(E), HFO-1123 and R32, the total amount of HFO-1132(E), HFO-1123 and R32 being ≥ 99.5 mass% based on the entire refrigerant, wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments PS, ST, and TP that connect the following 3 points:
point P (31.8, 49.8, 18.4),
point S (24.9, 56.7, 18.4), and
point T (35.0, 51.1, 13.9),
or on these line segments;
the line segment ST is represented by coordinates (-0.0632z²-0.2026z+50.03, 0.0632z²-0.7974z+49.97, z),
the line segment TP is represented by coordinates (0.0083z²-0.984z+47.1, -0.0083z²-0.016z+52.9, z), and
the line segment PS is a straight line.

The present invention further provides the use of the present composition (i) as a working fluid for a refrigerating machine or (ii) as an alternative refrigerant for R410A.

Also, the present invention provides a refrigerating machine comprising the present composition as a working fluid.

Yet further the present invention provides a method for operating a refrigerating machine, comprising the step of circulating the present composition as a working fluid in a refrigerating machine.

Preferred embodiments of the invention are as defined in the appended dependent claims and/or in the following detailed description.

### Advantageous Effects of Invention

The refrigerant according to the present disclosure has two types of performance, i.e., a coefficient of performance that is equivalent to that of R410A and a sufficiently low GWP.

### Brief Description of Drawings

Fig. 1 is a schematic view of an apparatus used in a flammability test.
Fig. 2 is a view showing points A to U; and line segments that connect the points in a ternary composition diagram in which the sum of HFO-1132(E), HFO-1123, and R32 is 100 mass%.

### Description of Embodiments

The present inventors conducted intensive studies to solve the above problem, and consequently found that a mixed refrigerant comprising trans-1,2-difluoroethylene (HFO-1132(E)), trifluoroethylene (HFO-1123), and difluoromethane (HFC-32 or R32) has the properties described above.

The present disclosure has been completed as a result of further research based on this finding. The present disclosure includes the following embodiments. Also, in the present specification the following definitions apply, if not otherwise indicated.

### Definition of Terms

The term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Examples of non-fluorocarbon compounds include propane (R290), propylene (R1270), butane (R600), isobutane (R600a), carbon dioxide (R744), and ammonia (R717).

The phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

When the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

The term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

A refrigerant having "WCF lower flammability" means that the most flammable composition (worst case of formulation for flammability: WCF) has a burning velocity of 10 cm/s or less according to the US ANSI/ASHRAE Standard 34-2013. Further, a refrigerant having "ASHRAE lower flammability" means that the burning velocity of WCF is 10 cm/s or less, that the most flammable fraction composition (worst case of fractionation for flammability: WCFF), which is specified by performing a leakage test during storage, shipping, or use based on ANSI/ASHRAE 34-2013 using WCF, has a burning velocity of 10 cm/s or less, and that the flammability classification according to the US ANSI/ASHRAE Standard 34-2013 is determined to be classified as "Class 2L."

### 1. Refrigerant

### 1.1 Refrigerant Component

The refrigerant according to the present disclosure (Also referred to as "the present refrigerant") is a mixed refrigerant comprising trans-1,2-difluoroethylene (HFO-1132(E)), trifluoroethylene (HFO-1123), and difluoromethane (R32). The total amount of HFO-1132(E), HFO-1123 and R32 is ≥ 99.5 mass% based on the entire refrigerant.

The present refrigerant has various properties that are desirable as an R410A-alternative refrigerant, i.e., a coefficient of performance equivalent to that of R410A and a sufficiently low GWP.

The present refrigerant is a refrigerant wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments PS, ST, and TP that connect the following 3 points:
point P (31.8, 49.8, 18.4),
point S (24.9, 56.7, 18.4), and
point T (35.0, 51.1, 13.9),
or on these line segments;
the line segment ST is represented by coordinates (-0.0632z²-0.2026z+50.03, 0.0632z²-0.7974z+49.97, z),
the line segment TP is represented by coordinates (0.0083z²-0.984z+47.1, -0.0083z²-0.016z+52.9, z), and
the line segment PS is a straight line.

The present refrigerant may further comprise other additional refrigerants in addition to HFO-1132(E), HFO-1123, and R32, as long as the above properties and effects are not impaired. In this respect, the present refrigerant comprises HFO-1132(E), HFO-1123, and R32 in a total amount of 99.5 mass% or more, preferably 99.75 mass% or more, and more preferably 99.9 mass% or more, based on the entire refrigerant.

Such additional refrigerants are not limited, and can be selected from a wide range of refrigerants. The mixed refrigerant may comprise a single additional refrigerant, or two or more additional refrigerants.

### 1.2. Use

The present refrigerant can be preferably used as a working fluid in a refrigerating machine.

The present composition is suitable for use as an alternative refrigerant for R410A.

### 2. Refrigerant Composition

The refrigerant composition according to the present disclosure ("the present refrigerant composition") comprises at least the present refrigerant, and can be used for the same use as the present refrigerant. Moreover, the present refrigerant composition can be further mixed with at least a refrigeration oil to thereby obtain a working fluid for a refrigerating machine.

The present refrigerant composition further comprises at least one other component in addition to the present refrigerant. The present refrigerant composition may comprise at least one of the following other components, if necessary. As described above, when the present refrigerant composition is used as a working fluid in a refrigerating machine, it is generally used as a mixture with at least a refrigeration oil. Therefore, it is preferable that the present refrigerant composition does not substantially comprise a refrigeration oil. Specifically, in the present refrigerant composition, the content of the refrigeration oil based on the entire refrigerant composition is preferably 0-1 mass%, and more preferably 0-0.1 mass%.

### 2.1. Water

The present refrigerant composition may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant,
and makes it less likely that the unsaturated fluorocarbon compounds will be oxidized, thus increasing the stability of the refrigerant composition.

### 2.2. Tracer

A tracer is added to the present refrigerant composition at a detectable concentration such that when the refrigerant composition has been diluted, contaminated, or undergone other changes, the tracer can trace the changes.

The present refrigerant composition may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃Cl)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The present refrigerant composition may contain one or more tracers at a total concentration of 10-1000 parts per million by weight (ppm), based on the entire refrigerant composition. The present refrigerant composition may preferably contain one or more tracers at a total concentration of 30-500 ppm, and more preferably 50-300 ppm, based on the entire refrigerant composition.

### 2.3. Ultraviolet Fluorescent Dye

The present refrigerant composition may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The present refrigerant composition may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01-5 mass%, and more preferably 0.05-2 mass%, based on the entire refrigerant.

### 2.5. Polymerization Inhibitor

The present refrigerant composition may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01-5 mass%, and more preferably 0.05-2 mass%, based on the entire refrigerant.

### 3. Refrigeration Oil-Containing Working Fluid

The refrigeration oil-containing working fluid according to the present disclosure ("the present working fluid") comprises at least the present refrigerant or the present refrigerant composition and a refrigeration oil, for use as a working fluid in a refrigerating machine. Specifically, the present working fluid is obtained by mixing a refrigeration oil used in a compressor of a refrigerating machine with the refrigerant or the refrigerant composition. The present working fluid generally comprises 10-50 mass% of refrigeration oil.

### 3.1. Refrigeration Oil

The present composition may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from polyalkylene glycols (PAG), polyol esters (POE), and polyvinyl ethers (PVE).

The refrigeration oil may further contain additives in addition to the base oil. The additive may be at least one member selected from antioxidants, extreme-pressure agents, acid scavengers, oxygen scavengers, copper deactivators, rust inhibitors, oil agents, and antifoaming agents.

A refrigeration oil with a kinematic viscosity of 5-400 cSt (5 - 400 mm²·s⁻¹) at 40°C is preferable from the standpoint of lubrication.

The present working fluid may further optionally contain at least one additive. Examples of additives include compatibilizing agents described below.

### 3.2. Compatibilizing Agent

The present working fluid may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The present method for operating a refrigerating machine is a method for operating a refrigerating machine using the present refrigerant.

Specifically, the present method for operating a refrigerating machine comprises the step of circulating the present refrigerant in a refrigerating machine.

### Examples

The present disclosure is described in more detail below with reference to Examples.

Mixed refrigerants were prepared by mixing HFO-1132(E), HFO-1123, and R32 at mass% based on their sum shown in Table 2.

The composition of each mixture was defined as WCF. A leak simulation was performed using National Institute of Science and Technology (NIST) Standard Reference Data Base Refleak Version 4.0 under the conditions for equipment, storage, shipping, leak, and recharge according to the ASHRAE Standard 34-2013. The most flammable fraction was defined as WCFF.

For each mixed refrigerant, the burning velocity was measured according to the ANSI/ASHRAE Standard 34-2013. When the burning velocities of the WCF composition and the WCFF composition are 10 cm/s or less, the flammability of such a refrigerant is classified as Class 2L (lower flammability) in the ASHRAE flammability classification.

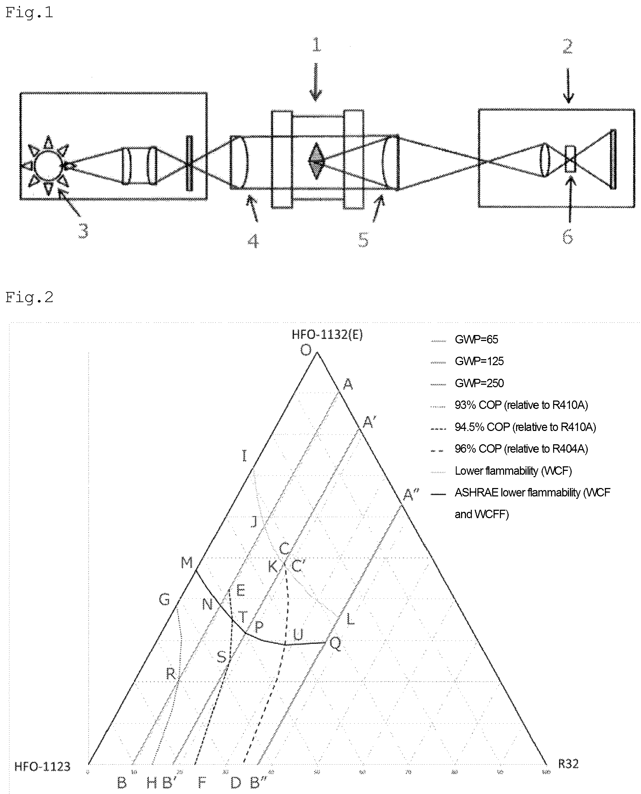

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0-9.9 ms, and the ignition energy was typically 0.1-1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC.

Table 2 shows the results.

**Table 2**

| Item | | Unit | M | N | T | P | U | Q |
|---|---|---|---|---|---|---|---|---|
| WCF | HFO-1132(E) | mass% | 47.1 | 38.5 | 35.0 | 31.8 | 28.9 | 29.5 |
| | HFO-1123 | mass% | 52.9 | 52.0 | 51.1 | 40.8 | 42.6 | 33.5 |
| | R32 | mass% | 0.0 | 9.5 | 13.9 | 18.4 | 28.5 | 37.0 |
| Leak condition that results in WCFF | | | Storage, Shipping -40°C, 92% release, on the liquid phase side | Storage, Shipping, -40°C, 92% release, on the liquid phase side | Storage, Shipping, -40°C, 92% release, on the liquid phase side | Storage, Shipping, -40°C, 92% release, on the liquid phase side | Storage, Shipping, -40°C, 93% release, on the liquid phase side | Storage, Shipping, -40°C, 94% release, on the liquid phase side |
| WCFF | HFO-1132(E) | mass% | 720 | 58.9 | 50.3 | 44.6 | 32.9 | 26.9 |
| | HFO-1123 | mass% | 28.0 | 32.4 | 33.8 | 32.6 | 24.7 | 16.1 |
| | R32 | mass% | 0.0 | 8.7 | 15.9 | 22.8 | 42.4 | 57.0 |
| Burning velocity (WCF) | | cm/s | 8 or less | 8 or less | 8 or less | 8 or less | 8 or less | 8 or less |
| Burning velocity (WCFF) | | cm/s | 10 | 10 | 10 | 10 | 10 | 10 |

The results in Table 2 indicate that in a ternary composition diagram of a mixed refrigerant of HFO-1132(E), HFO-1123, and R32 in which their sum is 100 mass%, a line segment connecting a point (0.0, 100.0, 0.0) and a point (0.0, 0.0, 100.0) is the base, the point (0.0, 100.0, 0.0) is on the left side, and the point (0.0, 0.0, 100.0) is on the right side, when coordinates (x,y,z) are on or below line segments MP and PQ that connect the following 3 points:
point M (47.1, 52.9, 0.0),
point P (31.8, 49.8, 18.4), and
point Q (29.5, 33.5, 37.0),
it can be determined that the refrigerant has ASHRAE lower flammability.

In the above, the line segment MP is represented by coordinates (0.0083z²-0.984z+47.1, -0.0083z²-0.016z+52.9, z), and the line segment PQ is represented by coordinates (0.0192z²-1.189z+47.168, -0.0192z²+0.189z+52.832, z).

For the points on the line segment MP, an approximate curve was determined from three points, i.e., points M, N, and P, by using the least-square method to determine coordinates. For the points on the line segment PQ, an approximate curve was determined from three points, i.e., points P, U, and Q, by using the least-square method to determine coordinates, in the same manner as for the points on the line segment IK.

The GWP of compositions each comprising a mixture of R410A (R32 = 50%/R125 = 50%) was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in PTL 1). The refrigerating capacity of compositions each comprising R410A and a mixture of HFO-1132(E) and HFO-1123 was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

The COP ratio and the refrigerating capacity (which may be referred to as "cooling capacity" or "capacity") ratio relative to those of R410 of the mixed refrigerants were determined. The conditions for calculation were as described below.
Evaporating temperature: 5°C
Condensation temperature: 45°C
Degree of superheating: 5K
Degree of subcooling: 5K
Compressor efficiency: 70%

Tables 3-23 show these values together with the GWP of each mixed refrigerant.

In the Tables 2-23 and the subsequent analysis, Examples 5, 6, 13, 24, and 54-58 represent embodiments of the claimed invention, while Examples 1-4, 7-12, 14-23, 25-53 and 59-88 describe embodiments not covered by the claimed invention.

**Table 3**

| Item | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| | | | A | B | A' | B' | A" | B" |
| HFO-1132(E) | mass% | R410A | 90.5 | 0.0 | 81.6 | 0.0 | 63.0 | 0.0 |
| HFO-1123 | mass% | | 0.0 | 90.5 | 0.0 | 81.6 | 0.0 | 63.0 |
| R32 | mass% | | 9.5 | 9.5 | 18.4 | 18.4 | 37.0 | 37.0 |
| GWP | - | 2088 | 65 | 65 | 125 | 125 | 250 | 250 |
| COP ratio | % (relative to R410A) | 100 | 99.1 | 92.2 | 98.7 | 93.7 | 98.7 | 96.4 |
| Refrigerating capacity ratio | % (relative to R410A) | 100 | 102.2 | 111.6 | 105.3 | 113.8 | 110.0 | 115.6 |

**Table 4**

| Item | Unit | Comparative Example 8 | Comparative Example 9 | Example 1 | Example 2 | Example 3 | Example 4 | Comparative Example 10 |
|---|---|---|---|---|---|---|---|---|
| | | O | C | C' | | U | | D |
| HFO-1132(E) | mass% | 100.0 | 48.8 | 47.8 | 30.8 | 28.9 | 21.1 | 0.0 |
| HFO-1123 | mass% | 0.0 | 32.8 | 33.1 | 36.4 | 42.6 | 48.1 | 67.0 |
| R32 | mass% | 0.0 | 18.4 | 19.1 | 23.8 | 28.5 | 30.8 | 33.0 |
| GWP | - | 1 | 125 | 130 | 161 | 193 | 209 | 1 |
| COP ratio | % (relative to R410A) | 99.7 | 96.0 | 96.0 | 96.0 | 96.0 | 96.0 | 96.0 |
| Refrigerating capacity ratio | % (relative to R410A) | 98.3 | 110.2 | 110.4 | 111.9 | 113.5 | 114.3 | 103.8 |

**Table 5**

| Item | Unit | Comparative Example 11 | Example 5 | Example 6 | Comparative Example 12 |
|---|---|---|---|---|---|
| | | E | T | S | F |
| HFO-1132(E) | mass% | 42.4 | 35.0 | 24.9 | 0.0 |
| HFO-1123 | mass% | 48.1 | 51.1 | 56.7 | 74.1 |
| R32 | mass% | 9.5 | 13.9 | 18.4 | 25.9 |
| GWP | - | 65 | 95 | 125 | 158 |
| COP ratio | % (relative to R410A) | 94.5 | 94.5 | 94.5 | 94.5 |
| Refrigerating capacity ratio | % (relative to R410A) | 109.3 | 111.0 | 112.7 | 114.6 |

**Table 6**

| Item | Unit | Comparative Example 13 | Example 7 | Example 8 | Example 9 | Comparative Example 14 |
|---|---|---|---|---|---|---|
| | | G | | R | | H |
| HFO-1132(E) | mass% | 38.5 | 30.7 | 20.6 | 13.3 | 0.0 |
| HFO-1123 | mass% | 61.5 | 64.3 | 69.9 | 75.0 | 86.1 |
| R32 | mass% | 0.0 | 5.0 | 9.5 | 11.7 | 139 |
| GWP | - | 1 | 35 | 65 | 80 | 95 |
| COP ratio | % (relative to R410A) | 93.0 | 93.0 | 93.0 | 93.0 | 93.0 |
| Refrigerating capacity ratio | % (relative to R410A) | 107.0 | 100.2 | 111.1 | 112.1 | 112.8 |

**Table 7**

| Item | Unit | Comparative Example 15 | Example 10 | Example 11 | Comparative Example 16 | Comparative Example 17 |
|---|---|---|---|---|---|---|
| | | I | J | K | | L |
| HFO-1132(E) | mass% | 720 | 57.7 | 48.4 | 41.1 | 35.5 |
| HFO-1123 | mass% | 28.0 | 32.8 | 33.2 | 31.2 | 27.5 |
| R32 | mass% | 0.0 | 9.5 | 18.4 | 27.7 | 37.0 |
| GWP | - | 1 | 65 | 125 | 188 | 250 |
| COP ratio | % (relative to R410A) | 96.6 | 95.8 | 96.0 | 96.7 | 97.2 |
| Refrigerating capacity ratio | % (relative to R410A) | 103.1 | 107.5 | 110.2 | 113.0 | 113.3 |

**Table 8**

| Item | Unit | Comparative Example 18 | Example 12 | Example 13 | Example 14 |
|---|---|---|---|---|---|
| | | M | N | P | Q |
| HFO-1132(E) | mass% | 47.1 | 38.5 | 31.8 | 29.5 |
| HFO-1123 | mass% | 52.9 | 52.0 | 49.8 | 33.5 |
| R32 | mass% | 0.0 | 9.5 | 18.4 | 37.0 |
| GWP | - | 1 | 65 | 125 | 250 |
| COP ratio | % (relative to R410A) | 93.8 | 94.2 | 94.9 | 97.0 |
| Refrigerating capacity ratio | % (relative to R410A) | 106.2 | 109.7 | 112.1 | 113.9 |

**Table 9**

| Item | Unit | Comparative Example 19 | Comparative Example 20 | Comparative Example 21 | Example 15 | Example 16 | Example 17 | Comparative Example 22 | Comparative Example 23 |
|---|---|---|---|---|---|---|---|---|---|
| HFO-1132(E) | mass% | 100 | 20.0 | 30.0 | 40.0 | 50.0 | 60.0 | 700 | 80.0 |
| HFO-1123 | mass% | 85.0 | 75.0 | 65.0 | 55.0 | 45.0 | 35.0 | 25.0 | 150 |
| R32 | mass% | 5.0 | 5.0 | 5.0 | 5.0 | 5.0 | 5.0 | 5.0 | 5.0 |
| GWP | - | 35 | 35 | 35 | 35 | 35 | 35 | 35 | 35 |
| COP ratio | % (relative to R410A) | 91.8 | 92.3 | 92.9 | 93.8 | 94.7 | 95.7 | 96.7 | 97.7 |
| Refrigerating capacity ratio | % (relative to R410A) | 110.1 | 109.9 | 109.3 | 108.4 | 107.4 | 106.1 | 104.7 | 103.1 |

**Table 10**

| Item | Unit | Comparative Example 24 | Comparative Example 25 | Example 18 | Example 19 | Example 20 | Example 21 | Comparative Example 26 | Comparative Example 27 |
|---|---|---|---|---|---|---|---|---|---|
| HFO-1132(E) | mass% | 90.0 | 100 | 20.0 | 30.0 | 40.0 | 50.0 | 60.0 | 700 |
| HFO-1123 | mass% | 5.0 | 80.0 | 700 | 60.0 | 50.0 | 40.0 | 30.0 | 20.0 |
| R32 | mass% | 5.0 | 100 | 100 | 100 | 100 | 100 | 100 | 100 |
| GWP | - | 35 | 68 | 68 | 68 | 68 | 68 | 68 | 68 |
| COP ratio | % (relative to R410A) | 98.8 | 92.6 | 93.0 | 93.6 | 94.4 | 95.2 | 96.1 | 97.1 |
| Refrigerating capacity ratio | % (relative to R410A) | 101.4 | 111.7 | 111.3 | 110.6 | 109.7 | 108.5 | 107.2 | 105.8 |

**Table 11**

| Item | Unit | Comparative Example 28 | Example 22 | Example 23 | Example 24 | Example 25 | Example 26 | Comparative Example 29 | Comparative Example 30 |
|---|---|---|---|---|---|---|---|---|---|
| HFO-1132(E) | mass% | 80.0 | 100 | 20.0 | 30.0 | 40.0 | 50.0 | 60.0 | 700 |
| HFO-1123 | mass% | 100 | 75.0 | 65.0 | 55.0 | 45.0 | 35.0 | 25.0 | 150 |
| R32 | mass% | 100 | 150 | 150 | 150 | 150 | 150 | 150 | 150 |
| GWP | - | 68 | 102 | 102 | 102 | 102 | 102 | 102 | 102 |
| COP ratio | % (relative to R410A) | 98.0 | 93.4 | 93.8 | 94.3 | 95.0 | 95.7 | 96.6 | 97.4 |
| Refrigerating capacity ratio | % (relative to R410A) | 104.1 | 112.9 | 112.4 | 111.7 | 110.7 | 100.5 | 108.1 | 106.6 |

**Table 12**

| Item | Unit | Comparative Example 31 | Comparative Example 32 | Comparative Example 33 | Comparative Example 34 | Comparative Example 35 | Comparative Example 36 | Comparative Example 37 | Comparative Example 38 |
|---|---|---|---|---|---|---|---|---|---|
| HFO-1132(E) | mass% | 80.0 | 100 | 20.0 | 30.0 | 40.0 | 50.0 | 60.0 | 700 |
| HFO-1123 | mass% | 5.0 | 700 | 60.0 | 50.0 | 40.0 | 30.0 | 20.0 | 100 |
| R32 | mass% | 150 | 20.0 | 20.0 | 20.0 | 20.0 | 20.0 | 20.0 | 20.0 |
| GWP | - | 102 | 136 | 136 | 136 | 136 | 136 | 136 | 136 |
| COP ratio | % (relative to R410A) | 98.3 | 94.2 | 94.5 | 95.0 | 95.6 | 96.3 | 97.0 | 97.8 |
| Refrigerating capacity ratio | % (relative to R410A) | 105.0 | 113.9 | 113.3 | 112.5 | 111.4 | 110.2 | 108.8 | 107.3 |

**Table 13**

| Item | Unit | Comparative Example 39 | Comparative Example 40 | Comparative Example 41 | Example 27 | Comparative Example 42 | Comparative Example 43 | Comparative Example 44 | Comparative Example 45 |
|---|---|---|---|---|---|---|---|---|---|
| HFO-1132(E) | mass% | 100 | 20.0 | 30.0 | 40.0 | 50.0 | 60.0 | 700 | 100 |
| HFO-1123 | mass% | 65.0 | 55.0 | 45.0 | 35.0 | 25.0 | 15.0 | 5.0 | 60.0 |
| R32 | mass% | 25.0 | 25.0 | 25.0 | 25.0 | 25.0 | 25.0 | 25.0 | 30.0 |
| GWP | - | 170 | 170 | 170 | 170 | 170 | 170 | 170 | 203 |
| COP ratio | % (relative to R410A) | 949 | 95.2 | 95.6 | 96.1 | 96.8 | 97.5 | 98.2 | 95.6 |
| Refrigerating capacity ratio | % (relative to R410A) | 114.5 | 113.9 | 113.1 | 112.0 | 110.8 | 109.4 | 108.0 | 114.9 |

**Table 14**

| Item | Unit | Comparative Example 46 | Example 28 | Example 29 | Comparative Example 47 | Comparative Example 48 | Comparative Example 49 | Example 30 | Example 31 |
|---|---|---|---|---|---|---|---|---|---|
| HFO-1132(E) | mass% | 20.0 | 30.0 | 35.0 | 40.0 | 50.0 | 60.0 | 100 | 20.0 |
| HFO-1123 | mass% | 50.0 | 40.0 | 35.0 | 30.0 | 20.0 | 100 | 55.0 | 45.0 |
| R32 | mass% | 30.0 | 30.0 | 30.0 | 30.0 | 30.0 | 30.0 | 35.0 | 35.0 |
| GWP | - | 203 | 203 | 203 | 203 | 203 | 203 | 237 | 237 |
| COP ratio | % (relative to R410A) | 95.9 | 96.2 | 96.5 | 96.7 | 97.3 | 97.9 | 96.3 | 96.5 |
| Refrigerating capacity ratio | % (relative to R410A) | 114.3 | 113.5 | 113.0 | 112.4 | 111.2 | 109.9 | 115.2 | 114.6 |

**Table 15**

| Item | Unit | Comparative Example 50 | Comparative Example 51 | Comparative Example 52 | Comparative Example 53 | Comparative Example 54 | Comparative Example 55 | Comparative Example 56 | Comparative Example 57 |
|---|---|---|---|---|---|---|---|---|---|
| HFO-1132(E) | mass% | 30.0 | 40.0 | 50.0 | 60.0 | 100 | 20.0 | 30.0 | 40.0 |
| HFO-1123 | mass% | 35.0 | 25.0 | 15.0 | 5.0 | 50.0 | 40.0 | 30.0 | 20.0 |
| R32 | mass% | 35.0 | 35.0 | 35.0 | 35.0 | 40.0 | 40.0 | 40.0 | 40.0 |
| GWP | - | 237 | 237 | 237 | 237 | 271 | 271 | 271 | 271 |
| COP ratio | % (relative to R410A) | 96.8 | 97.2 | 97.8 | 98.3 | 96.9 | 97.1 | 97.4 | 97.8 |
| Refrigerating capacity ratio | % (relative to R410A) | 113.7 | 112.7 | 111.5 | 110.2 | 115.2 | 114.7 | 113.8 | 112.9 |

**Table 16**

| Item | Unit | Comparative Example 58 | Example 32 | Example 33 | Example 34 | Example 35 | Example 36 | Example 37 | Example 38 |
|---|---|---|---|---|---|---|---|---|---|
| HFO-1132(E) | mass% | 50.0 | 42.0 | 40.0 | 42.0 | 44.0 | 35.0 | 37.0 | 39.0 |
| HFO-1123 | mass% | 100 | 60.0 | 58.0 | 56.0 | 54.0 | 61.0 | 59.0 | 57.0 |
| R32 | mass% | 40.0 | 2.0 | 2.0 | 2.0 | 2.0 | 4.0 | 4.0 | 4.0 |
| GWP | - | 271 | 14 | 14 | 14 | 14 | 28 | 28 | 28 |
| COP ratio | % (relative to R410A) | 98.2 | 93.6 | 93.4 | 93.6 | 93.8 | 93.2 | 93.4 | 93.5 |
| Refrigerating capacity ratio | % (relative to R410A) | 111.7 | 107.4 | 107.5 | 107.4 | 107.2 | 108.6 | 108.4 | 108.2 |

**Table 17**

| Item | Unit | Example 39 | Example 40 | Example 41 | Example 42 | Example 43 | Example 44 | Example 45 | Example 46 |
|---|---|---|---|---|---|---|---|---|---|
| HFO-1132(E) | mass% | 41.0 | 43.0 | 31.0 | 33.0 | 35.0 | 37.0 | 39.0 | 41.0 |
| HFO-1123 | mass% | 55.0 | 53.0 | 63.0 | 61.0 | 59.0 | 57.0 | 55.0 | 53.0 |
| R32 | mass% | 4.0 | 4.0 | 6.0 | 6.0 | 6.0 | 6.0 | 6.0 | 6.0 |
| GWP | - | 28 | 28 | 41 | 41 | 41 | 41 | 41 | 41 |
| COP ratio | % (relative to R410A) | 93.7 | 93.9 | 93.2 | 93.3 | 93.5 | 93.6 | 93.8 | 94.0 |
| Refrigerating capacity ratio | % (relative to R410A) | 108.1 | 107.9 | 109.5 | 109.3 | 109.2 | 109.0 | 108.8 | 108.6 |

**Table 18**

| Item | Unit | Example 47 | Example 48 | Example 49 | Example 50 | Example 51 | Example 52 | Example 53 | Example 54 |
|---|---|---|---|---|---|---|---|---|---|
| HFO-1132(E) | mass% | 27.0 | 29.0 | 31.0 | 33.0 | 35.0 | 37.0 | 39.0 | 33.0 |
| HFO-1123 | mass% | 65.0 | 63.0 | 61.0 | 59.0 | 57.0 | 55.0 | 53.0 | 51.0 |
| R32 | mass% | 8.0 | 8.0 | 8.0 | 8.0 | 8.0 | 8.0 | 8.0 | 16.0 |
| GWP | - | 55 | 55 | 55 | 55 | 55 | 55 | 55 | 109 |
| COP ratio | % (relative to R410A) | 93.2 | 93.3 | 93.4 | 93.6 | 93.7 | 93.9 | 94.0 | 94.6 |
| Refrigerating capacity ratio | % (relative to R410A) | 110.3 | 110.2 | 110.0 | 109.9 | 109.7 | 109.5 | 109.3 | 111.6 |

**Table 19**

| Item | Unit | Example 55 | Example 56 | Example 57 | Example 58 | Example 59 | Example 60 | Example 61 | Example 62 |
|---|---|---|---|---|---|---|---|---|---|
| HFO-1132(E) | mass% | 31.0 | 31.0 | 29.0 | 27.0 | 28.0 | 26.0 | 24.0 | 27.0 |
| HFO-1123 | mass% | 53.0 | 51.0 | 53.0 | 55.0 | 41.0 | 43.0 | 45.0 | 40.0 |
| R32 | mass% | 160 | 18.0 | 18.0 | 18.0 | 31.0 | 31.0 | 31.0 | 33.0 |
| GWP | - | 109 | 122 | 122 | 122 | 210 | 210 | 210 | 223 |
| COP ratio | % (relative to R410A) | 94.5 | 94.8 | 94.7 | 94.6 | 96.3 | 96.2 | 96.1 | 96.5 |
| Refrigerating capacity ratio | % (relative to R410A) | 111.8 | 112.1 | 112.3 | 112.5 | 113.7 | 113.9 | 114.1 | 113.9 |

**Table 20**

| Item | Unit | Example 63 | Example 64 | Example 65 | Example 66 | Example 67 | Example 68 | Example 69 | Example 70 |
|---|---|---|---|---|---|---|---|---|---|
| HFO-1132(E) | mass% | 25.0 | 23.0 | 21.0 | 19.0 | 17.0 | 15.0 | 13.0 | 11.0 |
| HFO-1123 | mass% | 420 | 44.0 | 46.0 | 48.0 | 50.0 | 52.0 | 54.0 | 56.0 |
| R32 | mass% | 33.0 | 33.0 | 33.0 | 33.0 | 33.0 | 33.0 | 33.0 | 33.0 |
| GWP | - | 223 | 223 | 223 | 223 | 223 | 223 | 223 | 223 |
| COP ratio | % (relative to R410A) | 96.4 | 96.3 | 96.3 | 96.2 | 96.2 | 96.1 | 96.1 | 96.0 |
| Refrigerating capacity ratio | % (relative to R410A) | 114.1 | 114.3 | 114.4 | 114.6 | 114.7 | 114.8 | 115.0 | 115.1 |

**Table 21**

| Item | Unit | Example 71 | Example 72 | Example 73 | Example 74 | Example 75 | Example 76 | Example 77 | Example 78 |
|---|---|---|---|---|---|---|---|---|---|
| HFO-1132(E) | mass% | 11.0 | 130 | 150 | 17.0 | 19.0 | 21.0 | 23.0 | 25.0 |
| HFO-1123 | mass% | 54.0 | 52.0 | 50.0 | 48.0 | 46.0 | 44.0 | 42.0 | 40.0 |
| R32 | mass% | 35.0 | 35.0 | 35.0 | 35.0 | 35.0 | 35.0 | 35.0 | 35.0 |
| GWP | - | 237 | 237 | 237 | 237 | 237 | 237 | 237 | 237 |
| COP ratio | % (relative to R410A) | 96.3 | 96.3 | 96.4 | 96.4 | 96.5 | 96.5 | 96.6 | 96.6 |
| Refrigerating capacity ratio | % (relative to R410A) | 115.1 | 115.0 | 114.9 | 114.8 | 114.6 | 114.5 | 114.3 | 114.2 |

**Table 22**

| Item | Unit | Example 79 | Example 80 | Example 81 | Example 82 | Example 83 | Example 84 | Example 85 | Example 86 |
|---|---|---|---|---|---|---|---|---|---|
| HFO-1132(E) | mass% | 27.0 | 11.0 | 13.0 | 150 | 17.0 | 19.0 | 21.0 | 23.0 |
| HFO-1123 | mass% | 38.0 | 52.0 | 50.0 | 48.0 | 46.0 | 44.0 | 42.0 | 40.0 |
| R32 | mass% | 35.0 | 37.0 | 37.0 | 37.0 | 37.0 | 37.0 | 37.0 | 37.0 |
| GWP | - | 237 | 250 | 250 | 250 | 250 | 250 | 250 | 250 |
| COP ratio | % (relative to R410A) | 96.7 | 96.6 | 96.6 | 96.6 | 96.7 | 96.7 | 96.8 | 96.8 |
| Refrigerating capacity ratio | % (relative to R410A) | 114.0 | 115.2 | 115.1 | 115.0 | 114.8 | 114.7 | 114.6 | 114.4 |

**Table 23**

| Item | Unit | Example 87 | Example 88 |
|---|---|---|---|
| HFO-1132(E) | mass% | 25.0 | 27.0 |
| HFO-1123 | mass% | 38.0 | 36.0 |
| R32 | mass% | 37.0 | 37.0 |
| GWP | - | 250 | 250 |
| COP ratio | % (relative to R410A) | 96.9 | 96.9 |
| Refrigerating capacity ratio | % (relative to R410A) | 114.2 | 114.1 |

The above results indicate that under the condition that the mass% of HFO-1132(E), HFO-1123, and R32 based on their sum is respectively represented by x, y, and z, when coordinates (x,y,z) in a ternary composition diagram in which the sum of HFO-1132(E), HFO-1123, and R32 is 100 mass%, a line segment connecting a point (0.0, 100.0, 0.0) and a point (0.0, 0.0, 100.0) is the base, and the point (0.0, 100.0, 0.0) is on the left side are within the range of a figure surrounded by line segments that connect the following 4 points:
point O (100.0, 0.0, 0.0),
point A" (63.0, 0.0, 37.0),
point B" (0.0, 63.0, 37.0), and
point (0.0, 100.0, 0.0),
or on these line segments,
the refrigerant has a GWP of 250 or less.

The results also indicate that when coordinates (x,y,z) are within the range of a figure surrounded by line segments that connect the following 4 points:
point O (100.0, 0.0, 0.0),
point A' (81.6, 0.0, 18.4),
point B' (0.0, 81.6, 18.4), and
point (0.0, 100.0, 0.0),
or on these line segments,
the refrigerant has a GWP of 125 or less.

The results also indicate that when coordinates (x,y,z) are within the range of a figure surrounded by line segments that connect the following 4 points:
point O (100.0, 0.0, 0.0),
point A (90.5, 0.0, 9.5),
point B (0.0, 90.5, 9.5), and
point (0.0, 100.0, 0.0),
or on these line segments,
the refrigerant has a GWP of 65 or less.

The results also indicate that when coordinates (x,y,z) are on the left side of line segments that connect the following 3 points:
point C (48.8, 32.8, 18.4),
point U (28.9, 42.6, 28.5), and
point D (0.0, 67.0, 33.0),
or on these line segments,
the refrigerant has a COP ratio of 96% or more relative to that of R410A.

In the above, the line segment CU is represented by coordinates (-0.0656z²+1.1139z+50.472, 0.0656z²-2.1139z+49.528, z), and the line segment UD is represented by coordinates (-3.4962z²+210.71z-3146.1, 3.4962z²-211.71z+3246.1, z).

The points on the line segment CU are determined from three points, i.e., point C, Comparative Example 10, and point U, by using the least-square method.

The points on the line segment UD are determined from three points, i.e., point U, Example 2, and point D, by using the least-square method.

The results also indicate that when coordinates (x,y,z) are on the left side of line segments that connect the following 3 points:
point E (42.4, 48.1, 9.5),
point T (35.0, 51.1, 13.9), and
point S (24.9, 56.7, 18.4),
or on these line segments,
the refrigerant has a COP ratio of 94.5% or more relative to that of R410A.

In the above, the line segment ES is represented by coordinates (-0.0632z²-0.2026z+50.03, 0.0632z²-0.7974z+49.97, z).

The points on the line segment ES are determined from three points, i.e., points E, T, and S, by using the least-square method.

The results also indicate that when coordinates (x,y,z) are on the left side of line segments that connect the following 3 points:
point G (38.5, 61.5, 0.0),
point R (20.6, 69.9, 9.5), and
point H (0.0, 86.1, 13.9),
or on these line segments,
the refrigerant has a COP ratio of 93% or more relative to that of R410A.

In the above, the line segment RG is represented by coordinates (-0.072z²-1.1998z+38.5, 0.072z²+0.1998z+61.5, z), and the line segment HR is represented by coordinates (-0.6198z²+9.8223z-16.772, 0.6198z²-10.8223z+116.772, z).

The points on the line segment RG are determined from three points, i.e., point G, Example 7, and point R, by using the least-square method.

The points on the line segment HR are determined from three points, i.e., point R, Example 9, and point H, by using the least-square method.

In contrast, as shown in, for example, Comparative Examples 8, 13, 15, and 18, when R32 is not contained, the concentrations of HFO-1132(E) and HFO-1123, which have a double bond, become relatively high; this undesirably leads to deterioration, such as decomposition, or polymerization in the refrigerant compound.

### Description of Reference Numerals

1: Sample cell
2: High-speed camera
3: Xenon lamp
4: Collimating lens
5: Collimating lens
6: Ring filter

## Claims

1. A composition comprising a refrigerant comprising HFO-1132(E), HFO-1123 and R32, the total amount of HFO-1132(E), HFO-1123 and R32 being ≥ 99.5 mass% based on the entire refrigerant, wherein
when the mass% of HFO-1132(E), HFO-1123, and R32 based on their sum in the refrigerant is respectively represented by x, y, and z, coordinates (x,y,z) in a ternary composition diagram in which the sum of HFO-1132(E), HFO-1123, and R32 is 100 mass% are within the range of a figure surrounded by line segments PS, ST, and TP that connect the following 3 points:
point P (31.8, 49.8, 18.4),
point S (24.9, 56.7, 18.4), and
point T (35.0, 51.1, 13.9),
or on these line segments;
the line segment ST is represented by coordinates (-0.0632z²-0.2026z+50.03, 0.0632z²-0.7974z+49.97, z),
the line segment TP is represented by coordinates (0.0083z²-0.984z+47.1, -0.0083z²-0.016z+52.9, z), and
the line segment PS is a straight line.

2. The composition of claim 1, which further comprises a refrigeration oil.

3. Use of the composition of claim 1 or 2 as a working fluid for a refrigerating machine.

4. Use of the composition of claim 1 or 2 as an alternative refrigerant for R410A.

5. A refrigerating machine comprising the composition of claim 1 or as a working fluid.

6. A method for operating a refrigerating machine, comprising the step of circulating the composition of claim 1 or 2 as a working fluid in a refrigerating machine.

## Patentansprüche

1. Zusammensetzung umfassend ein Kältemittel umfassend HFO-1132(E), HFO-1123 und R32, wobei die Gesamtmenge von HFO-1132(E), HFO-1123 und R32 ≥ 99,5 Massen-%, bezogen auf das gesamte Kältemittel, ist, wobei
wenn die Massen-% von HFO-1132(E), HFO-1123 und R32 auf der Basis ihrer Summe im Kältemittel jeweils durch x, y und z dargestellt werden, die Koordinaten (x, y, z) in einem ternären Zusammensetzungsdiagramm, in dem die Summe von HFO-1132(E), HFO-1123 und R32 100 Massen-% beträgt, innerhalb des Bereichs einer Figur liegen, die von Liniensegmenten PS, ST und TP umgeben ist, welche die folgenden 3 Punkte verbinden:
Punkt P (31,8, 49,8, 18,4),
Punkt S (24,9, 56,7, 18,4), und
Punkt T (35,0, 51,1, 13,9),
oder auf diesen Liniensegmenten;
das Liniensegment ST wird dargestellt durch die Koordinaten (-0,0632z²-0,2026z+50,03, 0,0632z²-0,7974z+49,97, z),
das Liniensegment TP wird dargestellt durch die Koordinaten (0,0083z²-0,984z+47,1, -0,0083z²-0,016z+52,9, z), und
das Liniensegment PS ist eine gerade Linie.

2. Zusammensetzung gemäß Anspruch 1, ferner umfassend ein Kältemaschinenöl.

3. Verwendung der Zusammensetzung gemäß Anspruch 1 oder 2 als Arbeitsmittel für eine Kältemaschine.

4. Verwendung der Zusammensetzung gemäß Anspruch 1 oder 2 als alternatives Kältemittel für R410A.

5. Kältemaschine umfassend die Zusammensetzung gemäß Anspruch 1 oder als Arbeitsmittel.

6. Verfahren zum Betreiben einer Kältemaschine, umfassend den Schritt des Zirkulierens der Zusammensetzung gemäß Anspruch 1 oder 2 als Arbeitsmittel in einer Kältemaschine.

## Revendications

1. Composition comprenant un réfrigérant comprenant HFO-1132(E), HFO-1123
et R32, la quantité totale de HFO-1132(E), HFO-1123 et R32 étant ≥ 99,5 % en masse
sur la base de l'ensemble du réfrigérant, dans laquelle
lorsque le % en masse de HFO-1132(E), HFO-1123 et R32 sur la base de leur somme dans le réfrigérant est respectivement représenté par des coordonnées x, y, et z, (x, y, z) dans un diagramme de composition ternaire dans lequel la somme de HFO-1132(E), HFO-1123 et R32 est égale à 100 % en masse sont dans la plage d'une figure entourée par des segments de droite PS, ST et TP qui relient les 3 points suivants :
point P (31,8, 49,8, 18,4),
point S (24,9, 56,7, 18,4), et
point T (35,0, 51,1, 13,9),
ou sur ces segments de droite ;
le segment de droite ST est représenté par les coordonnées (-0,0632z²-0,2026z+50,03, 0,0632z²-0,7974z+49,97, z), le segment de droite TP est représenté par les coordonnées (0,0083z²-0,984z+47,1, -0,0083z²-0,016z+52,9, z), et le segment de droite PS est une ligne droite.

2. Composition selon la revendication 1, qui comprend en outre une huile frigorigène.

3. Utilisation de la composition selon la revendication 1 ou la revendication 2 comme fluide de travail pour une machine frigorifique.

4. Utilisation de la composition selon la revendication 1 ou la revendication 2 comme réfrigérant alternatif au R410A.

5. Machine de réfrigération comprenant la composition selon la revendication 1 ou comme fluide de travail.

6. Procédé de fonctionnement d'une machine de réfrigération, comprenant l'étape de mise en circulation de la composition selon la revendication 1 ou la revendication 2 comme fluide de travail dans une machine de réfrigération.
